# EUROPÄISCHE PATENTANMELDUNG

(11) **EP 3 971 505 A1**
(43) Veröffentlichungstag der Anmeldung: **23.03.2022**
(21) Anmeldenummer: 21196775.7
(22) Anmeldetag: 15.09.2021
(51) Int. Cl.: F26B 3/347, F26B 13/10, F26B 13/20, H01M 4/04

(54) **VERFAHREN UND EINRICHTUNG ZUR TROCKNUNG EINES FOLIENMATERIALS**

(30) Priorität: 21.09.2020 DE 102020124517
(71) Anmelder: VOLKSWAGEN AG, 38440 Wolfsburg (DE)
(72) Erfinder: Glavas, Vedran, 38440 Wolfsburg (DE); Wiethop, Marco, 38302 Wolfenbüttel (DE); Olouou Guifo, Stephane Brice, 38444 Wolfsburg (DE); Koopmann, Julian, 38106 Braunschweig (DE); Wegener, Julian, 38442 Wolfsburg (DE); Mueller, Jonathan, 38518 Gifhorn (DE)
(74) Vertreter: karo IP

(57) **Zusammenfassung**

Verfahren und Einrichtung (5) zur Trocknung eines Folienmaterials (1), das ein bandförmiges Trägermaterial (2) mit einer darauf angeordneten Beschichtung (3) umfasst, wobei die Beschichtung (3) elektrisch leitfähige Bestandteile (4) aufweist. Die Einrichtung (5) weist mindestens einen Induktor (6) auf zur Trocknung der Beschichtung (3) zumindest durch elektromagnetische Induktion

## Beschreibung

Die Erfindung betrifft ein Verfahren und eine Einrichtung zur Trocknung eines Folienmaterials. Das Folienmaterial umfasst ein bandförmiges Trägermaterial mit mindestens einer darauf angeordneten Beschichtung, wobei die Beschichtung zumindest teilweise elektrisch leitfähige Bestandteile aufweist.

Für den Antrieb von Kraftfahrzeugen werden vermehrt Batterien, insbesondere Lithium-Ionen-Batterien eingesetzt. Batterien werden üblicherweise aus Zellen zusammengesetzt, wobei jede Zelle einen Stapel von Anoden-, Kathoden- und Separator-Blättern aufweist. Zumindest ein Teil der Anoden- und Kathodenblätter sind als Stromableiter ausgeführt, zur Ableitung des von der Zelle bereitgestellten Stroms hin zu einem außerhalb der Zelle angeordneten Verbraucher.

Bei der Herstellung einer Lithium-Ionen-Batteriezelle wird eine sogenannte Trägerfolie, also ein bandförmiges Trägermaterial, beidseitig mit einer Slurry über ein Auftragswerkzeug beschichtet. Die Slurry besteht aus mehreren Komponenten, u.a. einem Aktivmaterial, Leitruß, Binder, Lösungsmitteln und ggf. sonstigen Additiven. Nach der Beschichtung wird die Folie einem Trocknungsprozess zugeführt, um das enthaltene Lösungsmittel zu verdampfen und die restlichen Bestandteile fest mit der Trägerfolie zu verbinden. Die Trägerfolie bildet einen Stromableiter der Batteriezelle. Dabei kann beidseitig beschichtet und nachfolgend gemeinsam getrocknet oder jeweils einseitig beschichtet und einzeln getrocknet werden.

Der Trockner hat in der Regel die Gestalt eines Durchlauf-Schwebebahntrockners und ist mehrere Meter lang. Mittels von unten nach oben gerichteter Luftdüsen wird das Folienmaterial "in Schwebe" gehalten und der warmen/heißen Atmosphäre des Ofens ausgesetzt, wodurch die Slurry trocknet. Für eine gute Trocknung kann der Ofen in mehrere Zonen mit unterschiedlichen Temperaturen geteilt werden. Die Trocknung ist durch die Art von Ofen sehr ineffizient und verbraucht bei der Herstellung einer Batteriezelle sehr viel Energie. Des Weiteren ist im Trockner eine Steuerung der Temperatur nur in Bandrichtung, also der Förderrichtung des Folienmaterials, über unterschiedliche Heizzonen möglich. Ein gezielter Temperaturgradient quer zur Bandrichtung ist nicht möglich. Ein weiteres Problem liegt in der Ausrichtung des Leitrußes, wobei die den Leitruß bildenden Partikel bzw. Fasern einen Elektronentransport von Aktivmaterialpartikeln zum Trägermaterial, also zur Ableiterfolie, gewährleisten. Um diesen Transport möglichst effizient zu gestalten, sollten insbesondere die Leitruß-Fasern möglichst senkrecht zum Trägermaterial orientiert sein. Auch bei nicht sphärischen Aktivmaterial-Partikeln kann eine Ausrichtung der Partikel in der Elektrodenschicht positive Eigenschaften mit sich bringen. Dies ist bei aktuellen Ofenkonzepten jedoch nicht möglich.

Ein konventioneller Schwebebahn-Durchlaufofen bzw. -Trockner hat die folgenden Nachteile:
- hoher Energiebedarf;
- indirekte Erwärmung des Folienmaterials;
- begrenzte Durchlaufgeschwindigkeit der Elektroden durch den Ofen;
- keine gezielte Ausrichtung von Slurry-Bestandteilen während der Trocknung möglich;
- aufwendige und energieintensive Schwebetechnologie für die Trägerfolien.

Aus der US 9,077,000 B2 ist ein Verfahren zur Wärmebehandlung von Ableiterfolien bekannt. Diese werden entweder in einem Ofen ganzheitlich oder durch einen Laserstrahl ggf. nur lokal erwärmt.

Aufgabe der vorliegenden Erfindung ist es, die mit Bezug auf den Stand der Technik angeführten Probleme zumindest teilweise zu lösen. Insbesondere soll ein Verfahren sowie eine Einrichtung zur Trocknung eines Folienmaterials vorgeschlagen werden, wobei das Verfahren und die Einrichtung einen geringeren Energiebedarf aufweist und eine gezielte Erwärmung bestimmter Bereiche des Folienmaterials, eine genauere Temperaturführung sowie eine gezielte Ausrichtung von Slurry-Bestandteilen ermöglicht.

Zur Lösung dieser Aufgaben trägt ein Verfahren mit den Merkmalen gemäß Patentanspruch 1 und eine Einrichtung mit den Merkmalen gemäß Patentanspruch 12 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird ein Verfahren zur Trocknung eines Folienmaterials vorgeschlagen, wobei das Folienmaterial ein bandförmiges Trägermaterial mit mindestens einer darauf angeordneten Beschichtung umfasst. Die Beschichtung weist elektrisch leitfähige Bestandteile auf. Das Verfahren weist zumindest die folgenden Schritte auf:
a) Bereitstellen des Folienmaterials;
b) Bereitstellen einer Einrichtung zur Trocknung der Beschichtung, wobei die Einrichtung mindestens einen Induktor aufweist;
c) Trocknung der Beschichtung zumindest durch elektromagnetische Induktion.

Das bandförmige Trägermaterial besteht insbesondere aus zumindest teilweise elektrisch leitendem Material.

Bandförmig heißt insbesondere, dass das Trägermaterial eine sich entlang einer Förderrichtung erstreckende große, insbesondere im Wesentlichen endlose, Länge, eine sich quer dazu erstreckende kleinere Breite und eine quer zur Länge und Breite erstreckende noch kleinere Dicke aufweist. Breite und Dicke sind insbesondere jeweils konstant.

Das Trägermaterial wird insbesondere vor Schritt a) beschichtet.

Insbesondere erfolgt in Schritt c) auch eine Erzeugung einer Relativbewegung zwischen dem Folienmaterial und der Einrichtung.

Insbesondere wird das Trägermaterial entlang einer Förderrichtung relativ zu der Einrichtung zur Trocknung bewegt und, insbesondere unmittelbar, vor Eintritt in die Einrichtung mit der Beschichtung beschichtet.

Die Folienmaterial kann nur auf einer Seite oder auf einer ersten Seite und einer gegenüberliegenden zweiten Seite, die durch die Länge und die Breite definiert sind, beschichtet sein.

Gemäß Schritt c) kann das Folienmaterial gegenüber einer Umgebung und der Einrichtung entlang einer Förderrichtung durch die Einrichtung hindurch transportiert bzw. gefördert werden. Alternativ oder zusätzlich kann der mindestens ein Induktor eine Relativbewegung gegenüber dem Folienmaterial bzw. gegenüber der Umgebung durchführen.

Die Relativbewegung zwischen Folienmaterial und Einrichtung kann diskontinuierlich bevorzugt aber kontinuierlich erfolgen.

Insbesondere wird eine Trocknung mittels induktiver Erwärmung des Folienmaterials, also des Trägermaterials und der Slurry vorgeschlagen.

Das Trägermaterial und die darauf angeordnete Slurry können durch eine vor dem Beschichten befindlich Spannrolle und einer nach der Einrichtung befindlichen Spannrolle gespannt werden. Die Slurry kann beidseitig auf das Trägermaterial aufgebracht werden. Danach läuft das Folienmaterial an dem mindestens einen Induktor vorbei, bzw. wird relativ dazu bewegt, z. B. entlang der Förderrichtung, wobei die Bewegung diskontinuierlich oder kontinuierlich erfolgen kann.

Der mindestens eine Induktor induziert ein elektromagnetisches erstes Wechselfeld in das Trägermaterial und die elektrisch leitfähigen Bestandteile der Slurry. Dadurch erwärmt sich die Slurry und das Trägermaterial direkt. Die gewünschte Temperatur bzw. Temperaturprofil (bspw. entlang der Tiefe des Folienmaterials) kann mit den Parametern des mindestens einen Induktors, z. B. elektrischer Strom oder Frequenzangepasst werden.

Insbesondere wird das Folienmaterial zumindest entlang einer Förderrichtung durch die Einrichtung gefördert und dabei durch mindestens ein elektromagnetisches erstes Wechselfeld getrocknet. Das Folienmaterial wird zumindest durch einen Gasstrom oder durch ein elektromagnetisches zweites Wechselfeld berührungslos durch die Einrichtung gefördert.

Insbesondere kann das Folienmaterial durch das mindestens eine induzierte elektromagnetische erste Wechselfeld erwärmt und durch ein zusätzliches, zum ersten Wechselfeld inverses elektromagnetisches zweites Wechselfeld in der Schwebe gehalten werden, so dass das Folienmaterial berührungslos durch die Einrichtung gefördert werden kann. Auf den Einsatz eines Gasstroms oder von Spannrollen kann ggf. verzichtet werden.

Insbesondere ist der mindestens eine Induktor nur auf einer Seite oder auf einer ersten Seite und einer gegenüberliegenden zweiten Seite des Folienmaterials angeordnet.

Der mindestens eine Induktor kann in verschiedenen Formen eingesetzt werden, z. B. als Flachspule, Spule oder einzelne Windung.

Der mindestens eine Induktor kann als sogenannter Längsfeldinduktor ausgeführt sein. Dabei erstreckt sich der Induktor bzw. erstrecken sich die Spulenwindungen des Induktors um das Folienmaterial herum, wobei sich jede Spulenwindung quer zur Förderrichtung erstreckt. Das so erzeugte Wechselfeld verläuft auf jeder Seite des Folienmaterials im Wesentlichen parallel zur Förderrichtung.

Der mindestens eine Induktor kann als sogenannter Querfeldinduktor ausgeführt sein. Dabei erstreckt sich der Induktor bzw. erstrecken sich die Spulenwindungen des Induktors auf beiden Seiten des Folienmaterials, wobei sich jede Spulenwindung entlang der Breite des Folienmaterials über das Folienmaterial hinweg, also quer zur Förderrichtung, erstreckt. Das so erzeugte Wechselfeld verläuft entlang der Dicke des Folienmaterials durch das Folienmaterial hindurch.

Der mindestens eine Induktor kann als sogenannter Flächeninduktor ausgeführt sein. Dabei erstreckt sich der Induktor bzw. eine Windung mäanderförmig auf einer Seite des Folienmaterials jeweils entlang der Breite des Folienmaterials über das Folienmaterial hinweg, also quer zur Förderrichtung. Das so erzeugte Wechselfeld verläuft auf jeder Seite des Folienmaterials jeweils quer zur Erstreckung der Windung.

Es können auch andere Gestaltungen des mindestens einen Induktors vorgesehen sein. Es können auch verschiedene Gestaltungen kombiniert werden und/oder eine Mehrzahl von Induktoren gleicher oder unterschiedlicher Ausgestaltung eingesetzt werden.

Der mindestens eine Induktor wird insbesondere so betrieben, dass die Beschichtung und das Trägermaterial voneinander unterschiedlich erwärmt werden. Je nach eingestellten Prozessparametern kann die Erwärmung also auch mehr in der Slurry oder in dem Trägermaterial stattfinden.

Insbesondere wird das Folienmaterial zumindest entlang einer Förderrichtung durch die Einrichtung gefördert und mit dem mindestens einen Induktor ein Temperaturgradient in einer quer zur Förderrichtung verlaufenden ersten Richtung in dem Folienmaterial erzeugt. Ein Temperaturgradient kann auch entlang der Förderrichtung in dem Folienmaterial erzeugt werden. Insbesondere können entlang der Breite des Folienmaterials unterschiedliche Temperaturen in dem Folienmaterial erzeugt werden.

Insbesondere kann durch eine Segmentierung des mindestens einen Induktors oder einer Mehrzahl von Induktoren und durch eine Ansteuerung mit unterschiedlichen Parametern ein Temperaturgradient längs, insbesondere quer oder einer Kombination aus beidem, zur Förderrichtung erzeugt werden.

Insbesondere umfasst die Einrichtung eine Mehrzahl von Induktoren, die voneinander unabhängig betreibbar sind, so dass voneinander unterschiedliche Temperaturfelder erzeugt werden.

Durch entlang der Förderrichtung getrennt voneinander angeordnete bzw. unabhängig voneinander betriebene Induktoren können insbesondere unterschiedliche Temperaturfelder erzeugt werden.

Insbesondere können durch eine gesteuerte Erwärmung der Beschichtung Risse und/oder Poren in der Beschichtung erzeugbar werden, die sich ausgehend von einer Oberfläche der Beschichtung zumindest hin zum Trägermaterial erstrecken. Eine gezielte Anpassung eines Temperaturfelds kann z. B. dazu genutzt werden, dass an manchen Stellen des Folienmaterials gezielt Risse und/oder Poren in das Elektrodenmaterial bzw. die Beschichtung eingebracht werden, so dass der Elektrolyt der Batteriezelle tiefer in das Elektrodenmaterial bzw. in die Beschichtung eindringen kann.

Insbesondere werden durch den mindestens einen Induktor zumindest ein Teil der Bestandteile der Beschichtung magnetisiert. Diese magnetisierten Bestandteile können durch ein entlang einer Förderrichtung nachgeordnetes, ungerichtetes elektromagnetisches drittes Wechselfeld wieder entmagnetisiert werden. Durch die induzierten elektromagnetischen Wechselfelder können also z. B. die ferromagnetischen Bestandteile des Aktivmaterials der Beschichtung magnetisiert werden. Durch ein ungerichtetes elektromagnetisches drittes Wechselfeld am Ende der Trocknung bzw. der Einrichtung können die ferromagnetischen Bestandteile wieder entmagnetisiert werden.

Insbesondere ist über dem mindestens einen Induktor eine Absaugung als Bestandteil der Einrichtung angeordnet, über die die infolge der Erwärmung aus der Beschichtung austretenden Lösungsmitteldämpfe absaugt werden können.

Der Einsatz von Induktoren ist gegenüber den bekannte Schwebebahn-Öfen weniger energieintensiv. Außerdem kann ein Temperaturfeld gezielter angepasst werden. Die durch das jeweilige erste Wechselfeld induzierte Wärme kann insbesondere auch direkt in Partikeln bzw. Bestandteilen der Beschichtung bzw. der Slurry erzeugt werden, so dass eine schnellere Erwärmung als bei konventionellen Öfen erreicht werden kann. Es erfolgt also im Unterschied zu bekannten Öfen kein konvektiver Wärmeübergang von einem Heizgas auf das Folienmaterial, sondern die Erwärmung wird direkt im Folienmaterial erzeugt.

Weiterhin kann das jeweilige Wechselfeld über eine Geometrie des mindestens einen Induktors, dessen Anordnung und Parametrierung angepasst werden. Insbesondere lässt sich damit die Ausrichtung der Partikel bzw. Bestandteile der Slurry manipulieren. Z. B. kann eine senkrecht zum Trägermaterial ausgerichtete Anordnung von Leitrußfasern gezielt hergestellt werden.

Insbesondere ist das Trägermaterial eine elektrisch leitende Ableiterfolie und die Beschichtung eine Slurry, wobei die Slurry zumindest ein Aktivmaterial, einen Leitruß, einen Binder sowie ein Lösungsmittel umfasst. Ggf. kann die Beschichtung weitere Additive umfassen.

Insbesondere erfolgt durch den mindestens einen Induktor eine gezielte räumliche Ausrichtung des in der Slurry als Partikel oder Fasern vorliegenden Leitrußes.

Das Verfahren ist insbesondere durch ein Steuergerät, das zur Durchführung des beschriebenen Verfahrens ausgestattet, konfiguriert oder programmiert ist, durchführbar. Mit dem Steuergerät kann zumindest
- eine Vorschubgeschwindigkeit des Folienmaterials eingestellt werden, z. B. kann auch ein kontinuierlicher Vorschub oder ein diskontinuierlicher Vorschub eingestellt werden; und/oder
- ein Wechselfeld oder alle Wechselfelder, ggf. unabhängig voneinander betrieben, erzeugt werden; und/ oder
- der Auftrag der Slurry auf das Trägermaterial gesteuert werden; und/ oder
- eine Absaugung betrieben werden; und/ oder
- ein Gasstrom zum berührungslosen Fördern des Folienmaterials durch die Einrichtung geregelt werden.

Es wird insbesondere eine Einrichtung vorgeschlagen, die insbesondere geeignet ausgeführt ist, dass das vorstehend beschriebene Verfahren damit ausgeführt werden kann.

Die Einrichtung ermöglicht eine Trocknung eines Folienmaterials, das ein bandförmiges Trägermaterial mit einer darauf angeordneten Beschichtung umfasst, wobei die Beschichtung zumindest teilweise elektrisch leitfähige Bestandteile aufweist. Die Einrichtung weist mindestens einen Induktor auf zur Trocknung der Beschichtung zumindest durch elektromagnetische Induktion.

Insbesondere erzeugt die Einrichtung eine Relativbewegung zwischen dem Folienmaterial und der Einrichtung bzw. dem mindestens einen Induktor.

Die Einrichtung umfasst insbesondere das vorstehend beschrieben Steuergerät.

Weiter kann die Einrichtung eine Bereitstellung des Folienmaterials umfassen, zusätzlich ggf. Spannrollen zum Spannen des Folienmaterials, und/ oder eine Vorrichtung zum Aufbringen der Beschichtung auf das Trägermaterial, und/oder eine Absaugung, und/ oder eine Aufrolleinrichtung zum Aufrollen des fertig getrockneten Folienmaterials.

Weiter kann das Verfahren auch von einem Computer bzw. mit einem Prozessor einer Steuereinheit ausgeführt werden.

Es wird demnach auch ein System zur Datenverarbeitung vorgeschlagen, das einen Prozessor umfasst, der so angepasst/konfiguriert ist, dass er das Verfahren bzw. einen Teil der Schritte, insbesondere Schritt c), des vorgeschlagenen Verfahrens durchführt.

Es kann ein computerlesbares Speichermedium vorgesehen sein, das Befehle umfasst, die bei der Ausführung durch einen Computer/Prozessor diesen veranlassen, das Verfahren bzw. mindestens einen Teil der Schritte, insbesondere Schritt c), des vorgeschlagenen Verfahrens auszuführen.

Die Ausführungen zu dem Verfahren sind insbesondere auf die Einrichtung, das Steuergerät sowie auf das computerimplementierte Verfahren (also den Computer bzw. den Prozessor, das System zur Datenverarbeitung, das computerlesbare Speichermedium) übertragbar und umgekehrt.

Die Verwendung unbestimmter Artikel ("ein", "eine", "einer" und "eines"), insbesondere in den

Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch die angeführten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: eine erste Ausführungsvariante einer bekannten Einrichtung;
- Fig. 2:: eine zweite Ausführungsvariante einer bekannten Einrichtung;
- Fig. 3:: eine Einrichtung;
- Fig. 4:: eine erste Ausführungsvariante eines Induktors in einer perspektivischen Ansicht;
- Fig. 5:: eine zweiten Ausführungsvariante eines Induktors in einer perspektivischen Ansicht; und
- Fig. 6:: eine dritte Ausführungsvariante eines Induktors in einer perspektivischen Ansicht.

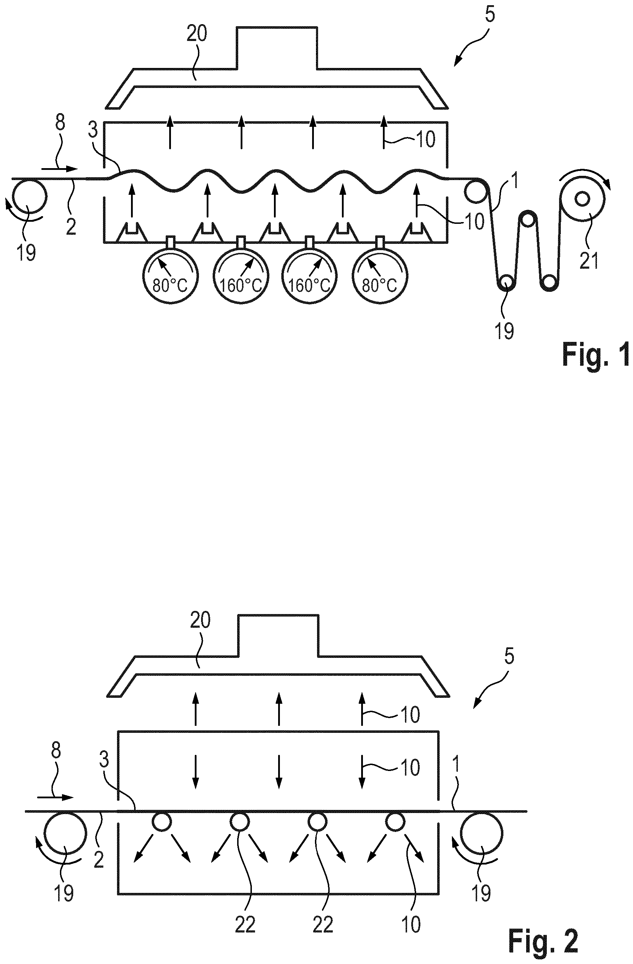

Die Fig. 1 zeigt eine erste Ausführungsvariante einer bekannten Einrichtung 5. Die Einrichtung 5 zum Trocknen ist hier in der Gestalt eines Durchlauf-Schwebebahntrockners ausgeführt und ist mehrere Meter lang. Das Folienmaterial 1 wird von links in die Einrichtung eingeführt und entlang der Förderrichtung 8 durch den Ofen gefördert. Mittels von unten nach oben gerichteter Luftdüsen wird das Folienmaterial 1 durch einen Gasstrom 10 "in Schwebe" gehalten und der warmen/heißen Atmosphäre des Ofens ausgesetzt, wodurch die Slurry, also die auf dem Trägermaterial 2 angeordnete Beschichtung 3, trocknet. Oberhalb des Folienmaterials 1 ist eine Absaugung 20 angeordnet, über die während der Trocknung aus der Beschichtung 3 austretende Lösungsmittel abgeführt werden können. Das Folienmaterial 1 mit der getrockneten Beschichtung 3 läuft nach dem Ofen über Spannrollen 19 und kann weiter abkühlen. Eine Aufrolleinrichtung 21 dient zum Aufrollen des fertig getrockneten Folienmaterials 1.

Die Fig. 2 zeigt eine zweite Ausführungsvariante einer bekannten Einrichtung 5. Auf die Ausführungen zu Fig. 1 wird verwiesen.

Im Unterschied zu ersten Ausführungsvariante sind hier zur Abstützung des Folienmaterials Leitwalzen 22 vorgesehen. Unterhalb der Leitwalzen 22 und des Folienmaterials 1 wird ein Unterdruck eingestellt, so dass die Beschichtung über einen von oben nach unten strömenden Gasstrom 10 getrocknet und dabei sichergestellt wird, dass das Folienmaterial 1 auf den Leitwalzen 22 aufliegt.

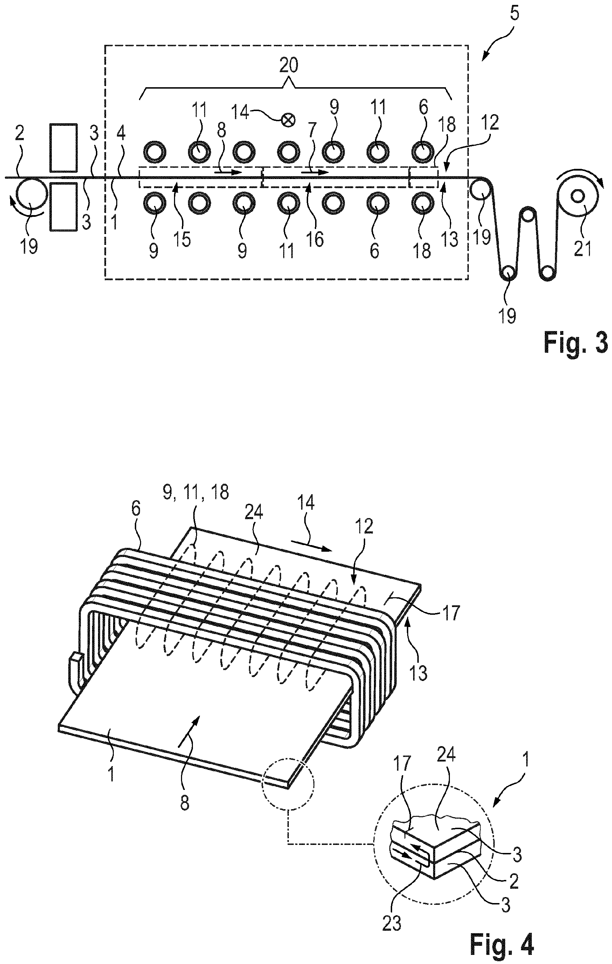

Fig. 3 zeigt eine Einrichtung 5. Auf die Ausführungen zu Fig. 1 und 2 wird verwiesen.

Die Einrichtung 5 ermöglicht das Erzeugen einer Relativbewegung 7 zwischen dem Folienmaterial 1 und der Einrichtung 5 und eine Trocknung der Beschichtung 3 durch elektromagnetische Induktion. Das Steuergerät ist hier nicht dargestellt. Das Steuergerät kann zur Steuerung der betreffenden Komponenten in bekannter Weise mit diesen verbunden sein bzw. kommunizieren.

Die Einrichtung 5 umfasst eine Bereitstellung des Folienmaterials 1, eine Vorrichtung zum Aufbringen der Beschichtung 3 auf das Trägermaterial 2, Spannrollen 19 zum Spannen des Folienmaterials 1, eine Mehrzahl von Induktionen 6 zur Erzeugung von Wechselfeldern 9, 11, 18, eine Absaugung 20 zum Absaugen der bei der Trocknung aus der Beschichtung 3 freigesetzten Lösungsmittel, Spannrollen 19 zum Einrichten einer Kühlstrecke für das Folienmaterial 1 sowie eine Aufrolleinrichtung 21 zum Aufrollen des fertig getrockneten Folienmaterials 1.

Gemäß Schritt a) des Verfahrens erfolgt ein Bereitstellen des Folienmaterials 1. Vor Schritt a) erfolgt ein Bereitstellen des Trägermaterials 2 und eine Beschichtung des Trägermaterials 2 mit der die Beschichtung 3 bildenden Slurry, die elektrisch leitfähige Bestandteile 4 aufweist. Gemäß Schritt b) erfolgt ein Bereitstellen einer Einrichtung 5 zur Trocknung der Beschichtung 4, wobei die Einrichtung 5 eine Mehrzahl von Induktoren 6 aufweist; Gemäß Schritt c) erfolgt ein Erzeugen einer Relativbewegung 7 zwischen dem Folienmaterial 1 und der Einrichtung 5 und eine Trocknung der Beschichtung 3 durch elektromagnetische Induktion.

Das bandförmige Trägermaterial 2 besteht aus elektrisch leitendem Material. Das Trägermaterial 2 weist eine sich entlang der Förderrichtung 8 erstreckende große, insbesondere im Wesentlichen endlose, Länge, eine sich quer dazu erstreckende kleinere Breite und eine quer zur Länge und Breite erstreckende noch kleinere Dicke auf.

Gemäß Schritt c) wird das Folienmaterial 1 gegenüber einer Umgebung und der Einrichtung 5 entlang einer Förderrichtung 8 durch die Einrichtung 5 hindurch transportiert bzw. gefördert. Die Induktoren 6 sind hier ortsfest angeordnet.

Das Trägermaterial 2 und die darauf angeordnete Slurry werden durch eine vor dem Beschichten befindliche Spannrolle 19 und einer nach der Einrichtung befindlichen Spannrolle 19 gespannt. Nach Aufbringung der Beschichtung 3 läuft das Folienmaterial 1 an den Induktoren 6 entlang der Förderrichtung 8 vorbei. Die Induktoren 6 induzieren ein elektromagnetisches erstes Wechselfeld 9 in das Trägermaterial 2 und die elektrisch leitfähigen Bestandteile 4 der Slurry. Dadurch erwärmt sich die Slurry und das Trägermaterial 2 direkt. Die Parameter der Induktoren 6, z. B. elektrischer Strom oder Frequenz, können der gewünschten Temperatur angepasst werden.

Das Folienmaterial 1 wird entlang der Förderrichtung 8 durch die Einrichtung 5 gefördert und dabei durch ein elektromagnetisches erstes Wechselfeld 9 getrocknet. Das Folienmaterial 1 wird durch ein von Induktoren 6 erzeugtes elektromagnetisches zweites Wechselfeld 11 berührungslos durch die Einrichtung 5 gefördert.

Die Induktoren 6 sind auf einer ersten Seite 12 und einer gegenüberliegenden zweiten Seite 13 des Folienmaterials 1 angeordnet.

Das Folienmaterial 1 wird entlang der Förderrichtung 8 durch die Einrichtung 5 gefördert und mit den Induktoren 6 wird ein Temperaturgradient in einer quer zur Förderrichtung 8 verlaufenden ersten Richtung 14 in dem Folienmaterial 1 erzeugt. Insbesondere können entlang der Breite des Folienmaterials 1 so unterschiedliche Temperaturen in dem Folienmaterial 1 erzeugt werden.

Die Einrichtung 5 umfasst eine Mehrzahl von Induktoren 6, die voneinander unabhängig betreibbar sind, so dass z. B entlang der Förderrichtung 8, oder aber auch quer dazu, voneinander unterschiedliche Temperaturfelder, hier ein erstes Temperaturfeld 15 und nachfolgend ein zweites Temperaturfeld 16, erzeugt werden können.

Durch eine gesteuerte Erwärmung der Beschichtung 3 können Risse und/oder Poren 17 in der Beschichtung 3 erzeugt werden, die sich ausgehend von einer Oberfläche 24 der Beschichtung 3 hin zum Trägermaterial 2 erstrecken. Eine gezielte Anpassung eines Temperaturfelds 15, 16 kann z. B. dazu genutzt werden, dass an manchen Stellen des Folienmaterials 1 gezielt Risse und/oder Poren 17 in das Elektrodenmaterial bzw. die Beschichtung 3 eingebracht werden, so dass der Elektrolyt der Batteriezelle tiefer in das Elektrodenmaterial bzw. in die Beschichtung 3 eindringen kann.

Durch einen Induktor 6 kann zumindest ein Teil der Bestandteile 4 der Beschichtung 3 magnetisiert werden. Diese magnetisierten Bestandteile 4 können durch ein entlang einer Förderrichtung 8 nachgeordnetes, ungerichtetes elektromagnetisches drittes Wechselfeld 18 wieder entmagnetisiert werden. Durch die induzierten elektromagnetischen Wechselfelder 9, 11 können also z. B. die ferromagnetischen Bestandteile 4 des Aktivmaterials der Beschichtung 3 magnetisiert werden. Durch ein ungerichtetes elektromagnetisches drittes Wechselfeld 18 am Ende der Trocknung bzw. der Einrichtung 5 können die ferromagnetischen Bestandteile 4 wieder entmagnetisiert werden.

Fig. 4 zeigt eine erste Ausführungsvariante eines Induktors 6 in einer perspektivischen Ansicht. Der Induktor 6 ist als sogenannter Längsfeldinduktor ausgeführt. Dabei erstreckt sich der Induktor 6 bzw. erstrecken sich die Spulenwindungen des Induktors 6 um das Folienmaterial 1 herum, wobei sich jede Spulenwindung quer zur Förderrichtung 8 erstreckt. Das so erzeugte Wechselfeld 9, 11, 18 verläuft auf jeder Seite 12, 13 des Folienmaterials 1 im Wesentlichen parallel zur Förderrichtung 8. Die Richtung des in dem Folienmaterial 1 erzeugten Stroms 23 ist in dem vergrößerte Ausschnitt des Folienmaterials 1 dargestellt.

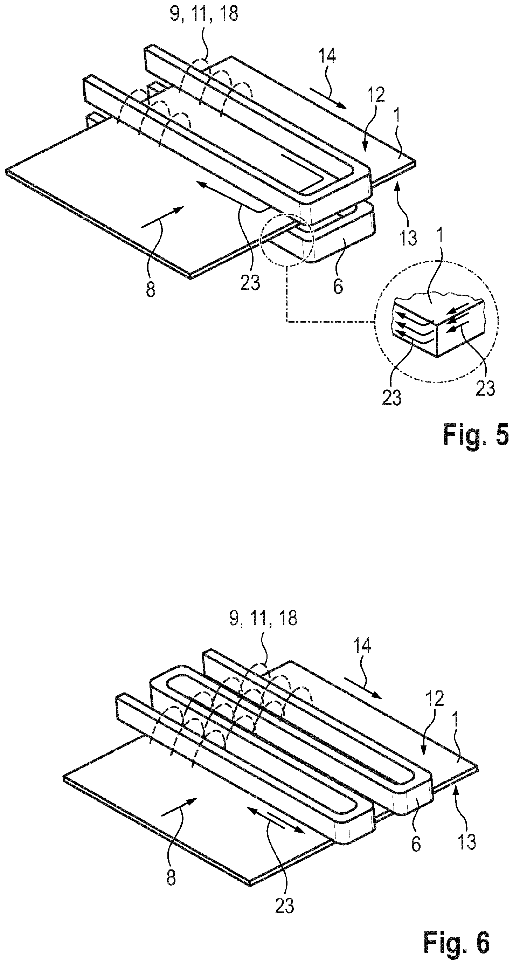

Fig. 5 zeigt eine zweite Ausführungsvariante eines Induktors 6 in einer perspektivischen Ansicht. Der Induktor 6 ist als sogenannter Querfeldinduktor ausgeführt. Dabei erstreckt sich der Induktor 6 bzw. erstrecken sich die Spulenwindungen des Induktors 6 auf beiden Seiten des Folienmaterials 1, wobei sich jede Spulenwindung entlang der Breite des Folienmaterials 1 über das Folienmaterial 1 hinweg, also quer zur Förderrichtung 8, erstreckt. Das so erzeugte Wechselfeld 9, 11, 18 verläuft entlang der Dicke des Folienmaterials 1 durch das Folienmaterial 1 hindurch. Die Richtung des in dem Folienmaterial 1 erzeugten Stroms 23 ist in dem vergrößerte Ausschnitt des Folienmaterials 1 dargestellt.

Fig. 6 zeigt eine dritte Ausführungsvariante eines Induktors 6 in einer perspektivischen Ansicht. Der Induktor 6 ist als sogenannter Flächeninduktor ausgeführt. Dabei erstreckt sich der Induktor 6 bzw. eine Windung mäanderförmig auf einer Seite 12, 13 des Folienmaterials 1 jeweils entlang der Breite des Folienmaterials 1 über das Folienmaterial 1 hinweg, also quer zur Förderrichtung 8. Das so erzeugte Wechselfeld 9, 11, 18 verläuft auf jeder Seite 12, 13 des Folienmaterials 1 jeweils quer zur Erstreckung der Windung. Die Richtung des in dem Folienmaterial 1 erzeugten Stroms 23 ist in dem vergrößerten Ausschnitt des Folienmaterials 1 zu Fig. 5 dargestellt.

### Bezugszeichenliste

- 1: Folienmaterial
- 2: Trägermaterial
- 3: Beschichtung
- 4: Bestandteil
- 5: Einrichtung
- 6: Induktor
- 7: Relativbewegung
- 8: Förderrichtung
- 9: erstes Wechselfeld
- 10: Gasstrom
- 11: zweites Wechselfeld
- 12: erste Seite
- 13: zweite Seite
- 14: erste Richtung
- 15: erstes Temperaturfeld
- 16: zweites Temperaturfeld
- 17: Riss
- 18: drittes Wechselfeld
- 19: Spannrolle
- 20: Absaugung
- 21: Aufrolleinrichtung
- 22: Leitwalzen
- 23: Strom
- 24: Oberfläche

## Patentansprüche

1. Verfahren zur Trocknung eines Folienmaterials (1), das ein bandförmiges Trägermaterial (2) mit mindestens einer darauf angeordneten Beschichtung (3) umfasst, wobei die Beschichtung (3) zumindest teilweise elektrisch leitfähige Bestandteile (4) aufweist; zumindest aufweisend die folgenden Schritte:
a) Bereitstellen des Folienmaterials (1);
b) Bereitstellen einer Einrichtung (5) zur Trocknung der Beschichtung (3), wobei die Einrichtung (5) mindestens einen Induktor (6) aufweist;
c) Trocknung der Beschichtung (3) zumindest durch Erwärmung des Folienmaterials (1) mittels elektromagnetischer Induktion.

2. Verfahren nach Patentanspruch 1, wobei während Schritt c) eine Relativbewegung (7) zwischen dem Folienmaterial (1) und der Einrichtung (5) erzeugt wird.

3. Verfahren nach Patentanspruch 2, wobei das Folienmaterial (1) zumindest entlang einer Förderrichtung (8) durch die Einrichtung (5) gefördert und dabei durch mindestens ein elektromagnetisches erstes Wechselfeld (9) getrocknet wird; wobei das Folienmaterial (1) zumindest durch einen Gasstrom (10) oder durch ein elektromagnetisches zweites Wechselfeld (11) berührungslos durch die Einrichtung (5) gefördert wird.

4. Verfahren nach einem der vorhergehenden Patentansprüche, wobei der mindestens eine Induktor (6) nur auf einer Seite (12, 13) oder auf einer ersten Seite (12) und einer gegenüberliegenden zweiten Seite (13) des Folienmaterials (1) angeordnet ist.

5. Verfahren nach einem der vorhergehenden Patentansprüche, wobei der mindestens eine Induktor (6) so betrieben wird, dass die Beschichtung (3) und das Trägermaterial (1) voneinander unterschiedlich erwärmt werden.

6. Verfahren nach einem der vorhergehenden Patentansprüche, wobei das Folienmaterial (1) zumindest entlang einer Förderrichtung (8) durch die Einrichtung (5) gefördert wird und wobei mit dem mindestens einen Induktor (6) ein Temperaturgradient in einer quer zur Förderrichtung (8) verlaufenden ersten Richtung (14) oder längs der Förderrichtung (8) in dem Folienmaterial (1) erzeugt wird.

7. Verfahren nach einem der vorhergehenden Patentansprüche, wobei die Einrichtung (5) eine Mehrzahl von Induktoren (6) umfasst, die voneinander unabhängig betreibbar sind, so dass voneinander unterschiedliche Temperaturfelder (15, 16) zur Erwärmung erzeugt werden.

8. Verfahren nach einem der vorhergehenden Patentansprüche, wobei durch eine gesteuerte Erwärmung der Beschichtung (3) Risse (17) und/oder Poren in der Beschichtung (3) erzeugbar sind, die sich ausgehend von einer Oberfläche (24) der Beschichtung (3) zumindest hin zum Trägermaterial (2) erstrecken.

9. Verfahren nach einem der vorhergehenden Patentansprüche, wobei durch den mindestens einen Induktor (6) zumindest ein Teil der Bestandteile (4) der Beschichtung (3) magnetisiert werden und diese magnetisierten Bestandteile (4) durch ein entlang einer Förderrichtung (8) nachgeordnetes ungerichtetes elektromagnetisches drittes Wechselfeld (18) entmagnetisiert werden.

10. Verfahren nach einem der vorhergehenden Patentansprüche, wobei das Trägermaterial (2) eine zumindest teilweise elektrisch leitende Ableiterfolie und die Beschichtung (3) eine Slurry ist, wobei die Slurry zumindest ein Aktivmaterial, einen Leitruß, einen Binder sowie ein Lösungsmittel umfasst.

11. Verfahren nach Patentanspruch 10, wobei durch den mindestens einen Induktor (6) eine gezielte räumliche Ausrichtung zumindest des in der Slurry als Partikel oder Fasern vorliegenden Leitrußes erfolgt.

12. Einrichtung (5) zur Trocknung eines Folienmaterials (1), das ein bandförmiges Trägermaterial (2) mit einer darauf angeordneten Beschichtung (3) umfasst, wobei die Beschichtung (3) zumindest teilweise elektrisch leitfähige Bestandteile (4) aufweist; wobei die Einrichtung (5) mindestens einen Induktor (6) aufweist zur Trocknung der Beschichtung (3) zumindest durch elektromagnetische Induktion.
